# EUROPEAN PATENT APPLICATION

(11) **EP 3 960 345 A1**
(43) Date of publication of application: **02.03.2022**
(21) Application number: 21466003.7
(22) Date of filing: 19.08.2021
(51) Int. Cl.: B23C 5/06, B23C 5/28, B23C 5/10

(54) **CUTTING TOOL**

(30) Priority: 21.08.2020 CZ 20200468
(71) Applicant: Západoceská univerzita v Plzni, 301 00 Plzen (CZ)
(72) Inventor: Rehor, Jan, 332 01 Tymákov (CZ); Povolny, Michal, 339 01 Klatovy (CZ); Zatloukal, Tomas, 431 01 Údlice (CZ); Fulemova, Jaroslava, 267 24 Vizina (CZ)
(74) Representative: Polacek, Jiri

(57) **Abstract**

A cutting tool configured for being clamped in a machine tool, comprising at least one cutting insert (D) affixed to holder (N) of the cutting insert (D), where the holder (N) of the cutting insert (D) is provided with coolant supply (P). Exchangeable cutting insert (D) is available for cutting on the face (C) of the cutting insert (D) as well as both sides (B₁) and (B₂) of the cutting insert (D), where the slit (S)-shaped outlet of the coolant supply (P) is directed onto faces (C) and sides (B₁) and (B₂) of the cutting insert (D).

## Description

### Technical Field

The invention relates to a cutting tool configured for being clamped in a machine tool, the cutting tool comprising at least one cutting insert held in a cutting insert holder where the tool is provided with a cooling medium supply.

### Background Art

Milling of certain materials with the use of solid tools or tools with exchangeable cutting inserts requires cooling/lubrication to be applied during the cutting process. Generally, heat is generated during cutting by friction between the tool and the work, and by plastic deformation at the point of chip formation. Heat dissipation plays a key role in the tool durability and in the quality of the machined surface, predominantly in the surface integrity. Milling of certain materials with the use of solid tools or tools with exchangeable cutting inserts requires cooling/lubrication to be applied during the cutting process.

The medium, typically a liquid, is either supplied at normal pressure or at an increased pressure, which is known as high-pressure cooling, which helps the liquid enter the gap between the chip and the face/flank of the cutting tool. Background art includes cooling of a milling tool with liquid where; one of the alternatives involves internal cooling in which the coolant is supplied via the spindle or shaft of the machine tool, through an appropriate system of channels made in the tool, onto the cutting parts of the tool, often via orifices in the recesses for chips by which the process medium is supplied directly to the tool tip and to the cut.

For instance, there are disc milling cutters on whose wheel-shaped bodies there are cutting inserts arranged in shaped recesses on the wheel perimeter which are separated by recesses for chip removal. A method is known by which these recesses for chips communicate via radial channels with an axial through-bore in the tool body, which enables the liquid to be supplied to the individual recesses in which chips are formed, and therefore to the cutting inserts. To achieve this, very deep holes of relatively small diameters must be bored in a laborious process or electrical discharge-machined in the tool holders. Such procedures are very costly, and even then, the coolant is often delivered to the cutting inserts in a suboptimal manner.

For instance, patent no. 303363 discloses a chip cutting tool which is provided with at least one central bore to supply the cooling or lubricating medium and on whose major or minor flank near the cutting edge there is at least one communicating channel for supplying the cooling or lubricating medium, which is connected to the distribution channel. A groove is connected to the communicating channel on the major and/or minor flank. The cutting face may be provided with at least one additional channel for supplying the cooling or lubricating medium.

Patent no. EP1897642 discloses a disc-shaped milling tool with a central bore, in which a central pin is inserted and sealed with a movable sealing. The mid-length portion of the central pin is splined and the pin is inserted in the tool body which is provided with separate slots. This invention enables the flow of the liquid to be controlled in channels directed at the face of the cutting part of the cutting tool. It relies on a configuration where the component is inserted in the gap between the bore of the milling cutter and its clamping part, as in the present invention. It can be used for tools with multiple exchangeable cutting inserts aligned in the direction of the tool axis as well as for stepped tools. This invention, however, does not enable the liquid to be supplied to the flank of the cutting part.

Patent file no. DE102004055377 describes a tool which is provided with a distribution system comprising cooling or lubrication channels of various cross-sections communicating with the means of coolant supply to the face of the cutting insert. Patent no. EP 1897642 discloses a disc-shaped milling tool in which cooling of cutting inserts is provided with the use of two or more structural parts of the entire cutting tool, where individual discs contain channels and rings for supplying the liquid to the cut. Patent no. CZ306957 discloses a rotating tool with internal cooling which comprises holders of cutting inserts where the holders protrude from the rotating tool body which is configured for being clamped onto a carrier disc which, in turn, is configured for being held in a machine tool spindle and is provided with a process liquid supply to the interior of the body where a threaded pot-like ring is incorporated between the rotating tool body and the axial screw, where on the face of the rotating tool body there is a lid with orifices oriented at the cutting inserts where the thread of the lid matches the thread of the ring.

These solutions are costly to manufacture and lead to high maintenance costs for the cutting inserts with respect to their durability and life, and preclude multiple operations being performed with the tool, due to their rapidly decreasing durability or life because only a limited portion of the cutting tool is cooled.

### Disclosure of Invention

The performance deficiencies of the above solutions are eliminated by a cutting tool which is configured for being clamped in a machine tool where the cutting tool comprises at least one cutting insert affixed to a cutting insert holder where the holder is provided with coolant supply via multiple channels. The cutting insert is available for cutting on its face and both sides where the coolant supply outlet is directed at the face as well as the sides.

Preferably, the coolant supply outlet is slit-shaped to maintain uniform controlled spraying of the coolant onto the entire length of the cutting edge/edge of the insert.

A variable cross-section of the supply channel is preferable. It can be implemented in the slit outlet or within the holder. This solution enables coolant to be distributed at minimal flow loss and the desired intensity to the critical regions of the cutting insert.

Alternatively, the slit is divided with partitions which help direct the coolant flow onto the cutting parts of cutting inserts.

### Description of drawings

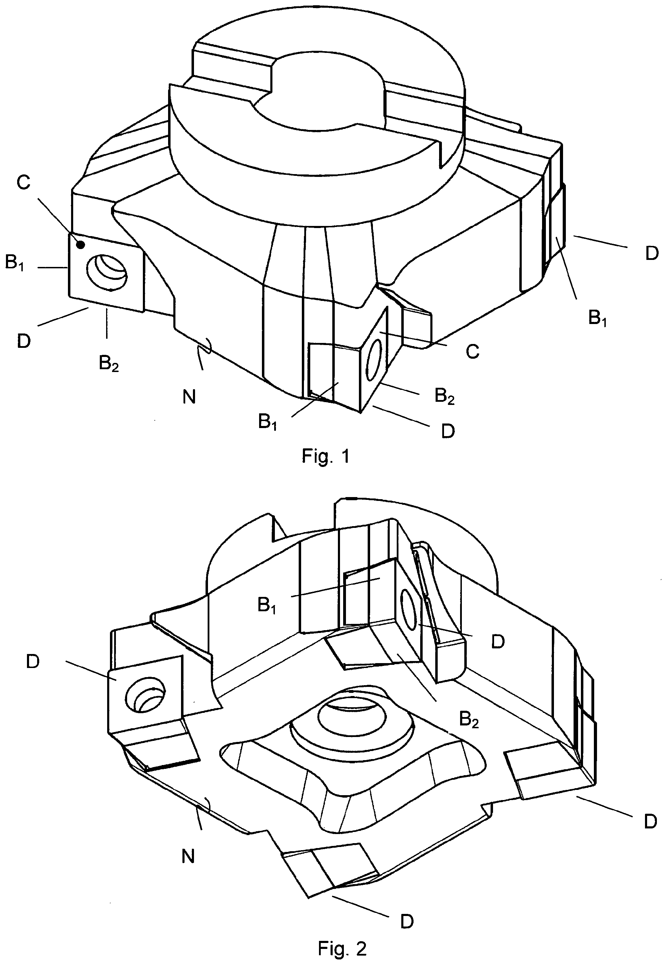

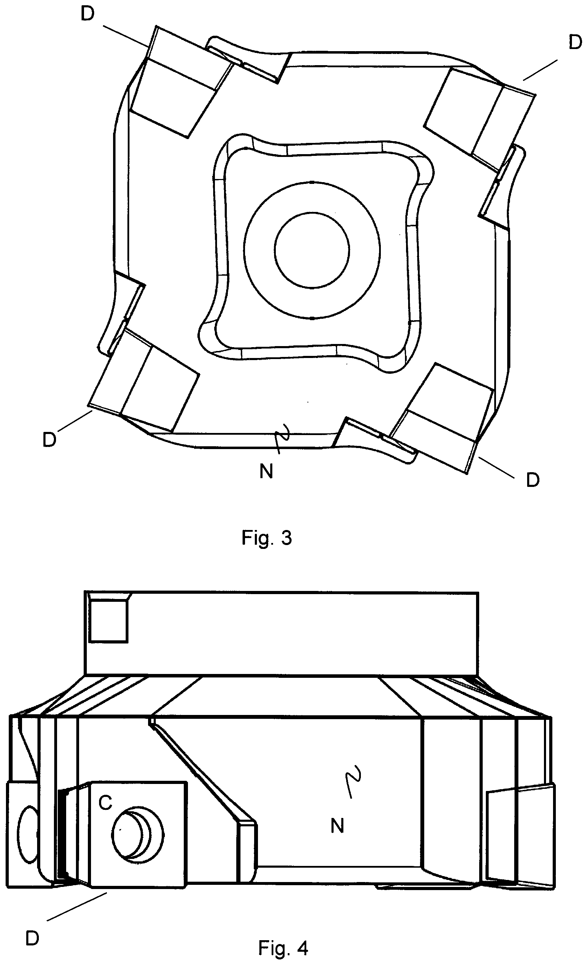

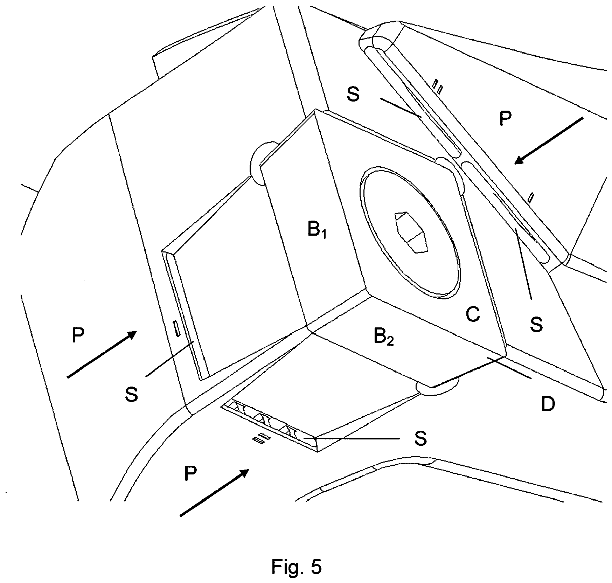

A general isometric top view of the cutting tool from the point of clamping in the machine tool is shown in Fig. 1, while Fig. 2 shows an isometric view of the cutting tool from the bottom, Fig. 3 shows a general view of the tool from the bottom, a side view of the tool is shown in Fig. 4, whereas Fig. 5 shows a close-up view of the configuration of the slits in the cutting tool holder.

### Description of example embodiment

A milling cutter configured for being clamped into a machine tool comprises exchangeable cutting inserts D, which are attached with screws to holder N of exchangeable cutting inserts D. Holder N is provided with coolant supply P. Part of holder N consists of a lightweight lattice.

Exchangeable cutting insert D is available for cutting on the face C of the cutting insert D as well as both sides β₁ and B₂ of the cutting insert D, where the outlet of the coolant supply P is directed onto faces C and sides B₁ and B₂ of the cutting insert D. The coolant supply P to the face C of the cutting insert D and sides B₁ and B₂ of the cutting insert D enables the single tool to perform various machining operations.

The outlet of the coolant supply P is shaped as a slit S which is dimensioned for the required amount and volume of the coolant. Slit S is also divided with partitions.

During machining, edges of cutting inserts D are in contact with the workpiece being machined. Movement of the tool removes a chip from the point of contact between the edge of cutting insert D and the workpiece. This is accompanied by generation of heat, particularly in the region of contact. The supply of the coolant via slits S onto the face C and sides B₁ and B₂ of the cutting insert D placed in the holder N of the tool in the course of machining reduces the amount of heat, improves chip removal and reduces the wear of the cutting insert D of the tool.

### Industrial Applicability

The tool according to the invention finds use in the design of tools for chip cutting.

## Claims

1. A cutting tool configured for being clamped in a machine tool, comprising at least one cutting insert (D) affixed to a holder (N) of the cutting insert (D), where the holder (N) of the cutting insert (D) is provided with a supply (P) of a cooling medium **characterized in that** the cutting insert (D) is available for cutting on the face (C) of the cutting insert (D) as well as both sides (B₁) and (B₂) of the cutting insert (D) where supply (P) of coolant is directed onto the faces (C) of the cutting insert (D) and sides (B₁) and (B₂) of the cutting insert (D).

2. The cutting tool according to claim 1 **characterized in that** the supply (P) of coolant has an outlet in the shape of a slit (S).

3. The cutting tool according to claim 2 **characterized in that** the slit (S) has a variable section.

4. The cutting tool according to claim 2 or 3 **characterized in that** the slit (S) is divided.
